# EUROPEAN PATENT SPECIFICATION

(11) **EP 4 675 264 B1**
(45) Date of publication and mention of the grant of the patent: **02.09.2026**
(21) Application number: 24186280.4
(22) Date of filing: 03.07.2024
(51) Int. Cl.: G01N 23/046, G01N 1/00, G01N 23/20025

(54) **SAMPLE CHANGER FOR X-RAY DEVICES**
PROBENWECHSLER FÜR RÖNTGENGERÄTE
CHANGEUR D'ÉCHANTILLONS POUR DISPOSITIFS À RAYONS X

(43) Date of publication of application: 07.01.2026
(73) Proprietor: Bruker Belgium N.V., 2550 Kontich (BE)
(72) Inventor: VERELST, Koen, 2930 Brasschaat (BE); KRUMM, Michael, 2000 Antwerpen (BE)
(74) Representative: Kohler Schmid Möbus Patentanwälte

(56) References cited:
- CN-A- 114 544 677
- US-A1- 2014 178 169
- US-B2- 10 803 574

## Description

The invention relates to an X-ray analysis device with a sample changer comprising a tray rotatable around a rotation axis Y and having a plurality of sample positions in a circular pattern, the rotatable tray being driven by a motor to rotate the tray around the rotation axis Y of the sample position.

X-ray analysis devices of this kind are shown in the BRUKER-brochure "SKYSCAN 1272 CMOS Edition" (= Reference [1]) or in the brochure "SKYSCAN 1275" (= Reference [2]).

### Technical background of the invention

In general, the present invention relates to the technical field of X-ray analysis for providing fast routine examinations of samples of different materials.

Thereby, methods employing X-ray fluorescence, X-ray diffractometry or other X-ray analysis methods are used for studying the features of material samples. The latter can be solid material in massive or pulverized form, but also fluids in appropriate containers.

A particularly powerful technique of X-ray analysis is 3D X-ray microscopy (3D XRM), also called "microCT" as described e.g. in References [1] and [2]. MicroCT is one of the most advanced methods of getting 3D insights into samples of any material, shape, or size with little to no sample preparation. Conventional microscopy use light or an electron beam to directly image a sample by refocusing the radiation passing through the sample, or alternative microscopy technique such as Atomic Force Microscopy ("AFM") use other sensors to probe the sample surface. These techniques can provide detailed local 2D images of surface or near-surface structures or properties. X-ray microscopy, however, can also image the 3D internal structure, measure the whole sample at once and starting right away avoiding extensive sample preparations that may alter or even destroy the sample. In particular the "SkyScan1275" device described in Reference [2] is specially designed for fast scanning with high quality results crucial for scientific research and industrial applications such as quality control or production process monitoring.

For these purposes, the generic X-ray analysis devices must provide a high level of automation. In such routine examinations a great number of samples have to be measured in short periods of time. Hence sample changer facilities for the picking out the sample to be actually measured out of a plurality of other sample to be examined at a different time are essential for a fast transport and correct positioning of the sample being actually in turn for measurement.

An early and comparatively slowly working sample changer for an X-ray analysis device is described in DE 198 51 501 C1 (= Reference [3]). Here, different ferromagnetic sample holders are gripped by means of an electro magnet and are de-magnetized after being put into their measuring position.

US 6,111,930 A (= Reference [4]) discloses a linear automatic sample changer for an X-ray diffractometer. There is no rotating sample tray and no rotation of the sample is possible.

CN 113960081 A (= Reference [5]) shows another linear sample holder providing a vertical lift of a sample to its measurement position. Again, there is no rotating sample tray and no rotation of the sample is possible.

CN 218995266 U (= Reference [6]) discloses a rotating sample tray. Samples are put onto a rotating plate, but are not picked and transferred to a measurement chamber. The sample picking is done from the top. No such thing as an end effector sitting inside the rotating sample changer for loading the samples into the measuring device is provided.

CN 106383134 A (= Reference [7]) describes a sample changer with a platform that rotates and brings a sample into the measuring position. No picking and placing of the sample are involved here.

In US D715,958 S (= Reference [8]), again sample picking is performed from the top of the device. No such thing as an end effector sitting inside the sample changer is disclosed.

CN 103344659 A (= Reference [9]) describes a vertical drop of the sample to some sort of transfer tube. Again, no such thing as an end effector sitting inside the sample changer is disclosed. Also, there are no rotating elements provided in this device.

US 2014/0123738 A1 (= Reference [10]) discloses a sample changer, which can receive sample holders. The changer comprises the circular tray in which there are through holes to receive the holders. It is associated to a lifting column actioned by a motor vertically moving the circular tray. A second motor rotates the circular tray. The circular tray is mobile in rotation and in vertical translation, but the document is silent about a device for sample feeding. However, the samples are put onto a rotating plate, but are not picked and transferred to a measurement chamber. US 10803574 B2 describes an x-ray inspection system comprising an x-ray source, an x-ray detector, a drive assembly that lifts a part carrier.

The existing Bruker micro-CT sample changer for the "SkyScan 1272" (see Reference [1]) and "SkyScan 1275" (see Reference [2]) already cited above describes a generic device relying on a mechanical principle to ensure sample handling and imaging. At its core, the system features a robotic arm mechanism, designed for precision and reliability. This robotic arm is equipped with specialized end effectors adept at securely grasping various sample holders. The arm's movements are determined by a programmed sequence, guiding it between the sample loading tray and the imaging chamber. Within the imaging chamber, the "SkyScan 1272" or "SkyScan 1275" performs a scan of the samples. The robotic arm places each sample in the optimal position for imaging, ensuring consistent results across multiple scans. This automation significantly reduces the need for manual intervention, thereby freeing up valuable time for researchers to focus on data analysis and interpretation. The sample changer is designed as a top loader - meaning the rotating disc/tray is inside a compartment put onto the top of the instrument.

The following sequence is executed:
- Rotate the sample disc/tray to the requested position
- Pick the sample holder (with sample on top)
- Retract the robotic arm from the disc/tray
- Move the robotic arm down
- Move the rotation stage to the hand over position
- Open the automatic door of the instrument
- Insert the sample onto the rotation stage with the robotic arm
- Drop the sample
- Retract the robotic am
- Close the automatic door of the instrument
- Perform the scan

Downside of this known mechanism:
- Instrument blocks entrance to- and view into the micro-CT system's sample chamber, because the lifting mechanism covers the instrument door
- Bulky instrument (lift stage)
- Not easy to equip the sample changer with samples if mounted on top of the instrument
- Difficult to install
- Complex movements, specimen trajectory from sample tray to inspection chamber
- Long travel with the lift stage, taking a long time to feed samples

### Objects of the invention

In view of this, it is an object of the present invention to provide -without much technical effort- a generic and compact sample changer, which is in particular intended for XRM (X-Ray Microscopy) benchtop devices, and which, in contrast to the known sample changers, can be loaded from the front side. The novel sample changer should be easy to use and easily to be applied in a wide variety of locations through its small and compact construction. Further, the sample changer should comprise a comparatively non-complex mechanism. The device should also provide the possibility of pre-selecting and positioning the samples next to a loading opening in order to facilitate a less time-consuming measurement.

### Brief description of the invention

This object is achieved, in accordance with the present invention and in a surprisingly simple and effective way, by modifying a generic X-ray analysis device with a sample changer as defined above in the first paragraph in that the sample changer comprises a telescopic arm having a drive system designed to perform a linear translatory back and forth movement in a Z-direction perpendicular to the rotation axis Y with an end effector arranged on the telescopic arm designed to pick up a sample from the tray and to carry the sample to a measurement chamber in the X-ray analysis device and back; and that the telescopic arm is arranged in an XZ plane perpendicular to the rotation axis Y being radially directed from the center to an outer circumference of the rotatable tray.

The present invention provides a sample changer that has particularly been designed for microCT desktop systems in the first place. In principle, it is a novel "variant" of the currently known "carousel" sample changers according to References [1] or [2] having the advantage that the door of the instrument itself is not covered leaving no access to the specimen chamber when the sample changer is installed.

Further, the sample changer comprises a non-complex mechanism with a simple telescopic arm performing a linear movement only and a rotatable tray for the selection of the samples.

The sample changer according to the present invention offers a great number of several significant advantages:

### Increased Efficiency

The sample changer automates the process of loading and positioning samples for imaging, significantly reducing the time and effort required by researchers.

This increased efficiency allows for higher throughput, enabling the imaging of more samples in a shorter amount of time.

### Consistency and Accuracy

By utilizing a telescopic arm and programmed sequences, the novel sample changer ensures consistent and accurate positioning of samples within the imaging chamber. This consistency is crucial for obtaining reliable and reproducible results across multiple scans. In contrast to the state of the art, there is no need for a precision-manufactured robotic arm that has to perform a sequence of different movements to load the sample.

### Minimized Risk of Sample Damage

The automated handling provided by the novel sample changer reduces the risk of sample damage or mishandling that may occur during manual loading and positioning. This is especially important when dealing with delicate or valuable samples.

### Customization and Flexibility

Sample changers often offer options for customizable sample positioning and imaging configurations, allowing researchers to tailor the system to their specific experimental needs. This flexibility enables a wide range of applications across various fields, from materials science to biology and beyond.

### Unattended Operation

With the novel sample changer in place, the user can initiate imaging runs and leave the system to operate unattended, freeing up their time for other tasks. This is particularly beneficial for long-term experiments or overnight scans.

### Streamlined Workflow

The integration of the novel sample changer into the micro-CT system streamlines the overall imaging workflow, reducing the need for manual intervention and simplifying the process from sample preparation to data acquisition.

Overall, the sample changer according to the present invention enhances the capabilities of micro-CT systems by improving efficiency, accuracy, and flexibility, ultimately empowering researchers to conduct more sophisticated experiments and obtain higher-quality data.

Further significant advantages of the present invention:
- Compact design (Pick & place device inside the carousel / circular sample tray)
   - telescopic arm to extend reach
   - carousel / circular tray rotates around telescopic arm
- Less complex movements
   - Telescopic arm with an end effector to pick and move sample placed inside circumference of carousel / circular sample tray
   - telescopic arm is static - no rotation, no lift - , only extends to take out sample and retracts to collect sample along one horizontal static axis
   - carousel / circular tray is fixed in vertical direction ( not lifted )
   - integrated mechanism to lift the sample in pick up position to be picked by the telescopic arm
- Easy to equip the sample changer with samples; tray mounted in front of the instrument
- Easy to install
- Short travel taking only little time

As the measurement time can be relatively long during CT measurement, the novel sample changer can pre-sort or position the sample carriers so that the subsequent loading step can be carried out more quickly. This is possible because the sample changer according to the invention can move independently of the closed measuring chamber. The rotational sample tray and the telescopic arm are outside the measuring chamber and can place the samples in different positions on the tray.

The main idea of the present invention is to design a compact pick & place mechanism mounted inside a circular sample tray - front loader to feed samples into the main system - which still allows access to the sample chamber when mounted on the main system. This concept eliminates the need for a lift mechanism blocking access to the sample changer and impairing manual single scan operation.

The sample changer can easily be installed onto the X-ray device without an additional alignment procedure. The changer can also be retrofitted to the X-ray device.

### Preferred embodiments and further developments of the invention

In particularly preferred embodiments of the invention, one end of the telescopic arm is arranged essentially in the center of the rotatable tray starting from the rotation axis Y of the sample position pattern, and that the drive system is arranged along the telescopic arm in a Z-direction perpendicular to the rotation axis Y.

The telescopic arm crosses the center of the tray but the movement does not necessarily originate in the center. Positioning the telescopic arm in the middle of the carousel is space-saving allowing for a compact design. Depending on the shape of the arm, the end effector can move above the tray, or the tray has a loading slot (as described below in detail) which allows the telescopic arm to pass through.

A class of advantageous embodiments of the present invention is characterized in that the sample changer is arranged in front of the X-ray analysis device such that the measurement chamber is linearly accessible in Z-direction with the telescopic arm, preferably through a shutter.

Thereby, the sample changer is adapted for use in combination with an X-ray device which is provided with a device door or a shutter to prevent X-radiation leaking out of the device. Preferably during loading and unloading of the samples into the CT device, the X-ray source will be shut down. Optionally a shutter could be arranged for the case of fragile X-ray sources that need to stay on during loading/unloading.

In a preferred further development of this class of embodiments, the sample changer comprises at least two fixing means, in particular anchors, arranged on the bottom plate which are designed to engage with counterparts, in particular pins, on the bottom plate of the X-ray analysis device in a linear movement of the sample changer to the X-ray analysis device, and a latching element to fasten the sample changer to the X-ray analysis device.

Installation is easy because the novel sample changer's position is defined by three fixed "anchors" underneath the main system in the base plate. The fork-shaped anchors engage in corresponding counter shapes, such as a pin, by a sliding movement. After the engagement the sample changer is fixed in position with a latching mechanism. No further alignment procedure is necessary.

The existing prior art sample changers have to be aligned each time they are installed.

In another class of comparatively compact and simple embodiments, the sample changer for an X-ray analysis device according to the invention, preferably an X-ray diffractometer or a CT apparatus, is characterized in that the sample changer further comprises a plurality of sample holders for carrying the objects to be analyzed, and designed to fit with the sample positions, whereby the sample positions are protrusions, recesses or through holes in the rotatable tray into which the user can position the samples.

In a preferred embodiment the sample changer comprises a pair of clamping jaws with a mechanism for clamping and opening the jaws to releasably lock the sample holder in position on the rotatable tray when the telescopic arm is approaching or retracting.

Further, it keeps the sample holders in place, e.g. during the scan when the sample holder is prone to wiggling during rotation of the carousel. The clamping arms are preferably an additional electro-mechanical assembly with automatically driven clamping jaws. This device is preferably mounted onto the rotatable tray.

Preferred is a further development of these embodiments, in which the sample holders comprise a circumferential rim or edge into which the telescopic arm can engage to lift the holder, and the end effector has a fork-shape designed to engage the sample holder.

Alternatively or conjointly, in a further advantageous variant of these embodiments, the sample changer further comprises a lifting mechanism for lifting the sample or the sample holder to be picked up by the end effector.

This additional lifting mechanism lifts the sample holder of about 1cm into the pick-up position in which the fork of the telescopic arm can engage.

Also favorable are alternative embodiments of the invention, which are characterized in that in the sample holders comprise a circumferential conical part and the end effector is designed as end effector or pincers that lift the sample holder when pressed together.

Here, the fork can be replaced by an end effector and the sample holder is provided with a conical feature, so that the end effector arms squeeze the conical area of the sample holder and it is then automatically lifted by the gripping movement. This means that a separate lifting mechanism is not required. Instead, an end effector is needed to squeeze the arms.

Further beneficial embodiments of the invention are characterized in that the rotating tray comprises a slot in Z-direction allowing the telescopic arm to pass through the slot into the X-ray analysis device.

This provides the possibility of pre-selecting and positioning the samples next to the loading slot which is useful for a less time-consuming measurement. Optionally one holding slot can be kept empty, i.e. without a sample holder, to allow the sample changer for advanced loading of the subsequent sample during the measurement time of the previous one.

Also within the scope of the present invention falls a method for performing an X-ray measurement comprising the following steps:
i. Providing an X-ray analysis device according to the invention as described above, whereby out of all positions of the rotatable tray of sample changer and the scan position inside the measurement instrument at least one position is free;
ii. loading the X-ray analysis device with a sample, starting the measurement, and placing the sample that is to be scanned next on a first side of the input slot and making sure that on the second side of the input slot there is a free position to place the measured sample.

By pre-sorting of the samples close to the input slot, the time to rotate the tray for unloading and loading is minimized.

Preferred is a further development of this method, whereby step ii. is carried out with the following sub-steps:
ii.1) Before the measurement of the first sample
   a) Dialing the rotatable tray to have the first sample to be measured in front of the end effector of the telescopic arm
   b) Picking up the first sample and place it into the X-ray analysis device ii.2) Start the measurement of the first sample,
ii.3) During the measurement of the first sample,
   a) dialing the rotatable tray to the position of the subsequent sample (second object) to be measured, pick the sample and put it onto the free first position next to the input slot
ii.4) After the measurement of the first sample,
   a) Picking up the first sample from the X-ray analysis device and position it to the free position on the second side of the input slot
   b) dialing the rotatable tray to the first side of the input slot which is filled by the subsequent sample, pick the sample and place it into the X-ray analysis device
   c) dialing the rotatable tray to the position next to the second side of the input slot, pick the sample and put it onto a free position on the rotatable tray
ii.5) Repeat steps ii.1) to ii.4) until every sample is measured.

A preferred variant of this further development comprises an initial step ii.1.1.a) clearing the scan position inside the measurement instrument when it is occupied by another sample than the first sample to be scanned by picking up the sample and put it onto the free position on the rotatable tray.

Alternatively or conjointly, a further advantageous variant comprises step ii.3.1.a): if the position next to a first side of the input slot is not free, dialing the rotatable tray to that position, pick the sample and put it onto a free position on the rotatable tray.

Another variant of the above further embodiment of the invention is characterized by comprising step ii.3.2): if the position next to a second side of the input slot is not free, dialing the rotatable tray to that position, picking the sample and putting it onto a free position on the rotatable tray.

Further advantages can be extracted from the description and the enclosed drawings. The features mentioned above and below can be used in accordance with the invention either individually or collectively in any combination. The embodiments mentioned are not to be understood as exhaustive enumeration but rather have exemplary character for the description of the invention.

### Detailed description of the invention and drawings

The invention is shown in the drawings and is explained in more detail based on illustrative embodiments.

In the drawings:
- Fig. 1a: shows a isometric view from above of an embodiment of the sample changer for an X-ray analysis device according to the invention;
- Fig. 1b: shows the sample changer as shown in Fig. 1a, but without a top cap;
- Fig. 1c: shows the sample changer as shown in Fig. 1b, but without the rotatable tray and its inner and outer casings;
- Fig. 1d: shows the sample changer as shown in Fig. 1c, but rotated by 90° around an rotation axis Y an without further casing and mounting parts;
- Fig. 1e: shows the sample changer as shown in Fig. 1b, but the rotatable tray being charged with two sample holders, one of which is gripped by the fork-shaped end effector;
- Fig. 1f: shows a partial view of the sample changer with clamping arms for the sample holder;
- Figs. 2a-2g: schematically show the carousel of the rotary tray in different working positions illustrating loading/unloading of a sample by simple direct loading/unloading;
- Figs. 3a-3Φ: schematically show the carousel of the rotary tray in different working positions illustrating loading/unloading of a sample by advanced more efficient loading/unloading according to the novel methods of the invention; and
- Figs. 4a, 4b: schematically show the carousel of the rotary tray performing a restauration of the original sequence.

The present invention is principally concerned with providing improved tools and methods for performing scientific and industrial X-ray investigations. In particular, the invention presents an X-ray analysis device with a **sample changer 10** comprising a **tray 11** rotatable around an **rotation axis Y** and having a **plurality of sample positions 12** in a circular pattern, the rotatable tray 11 being driven by a motor to rotate the tray 11 around the rotation axis Y of the sample position pattern.

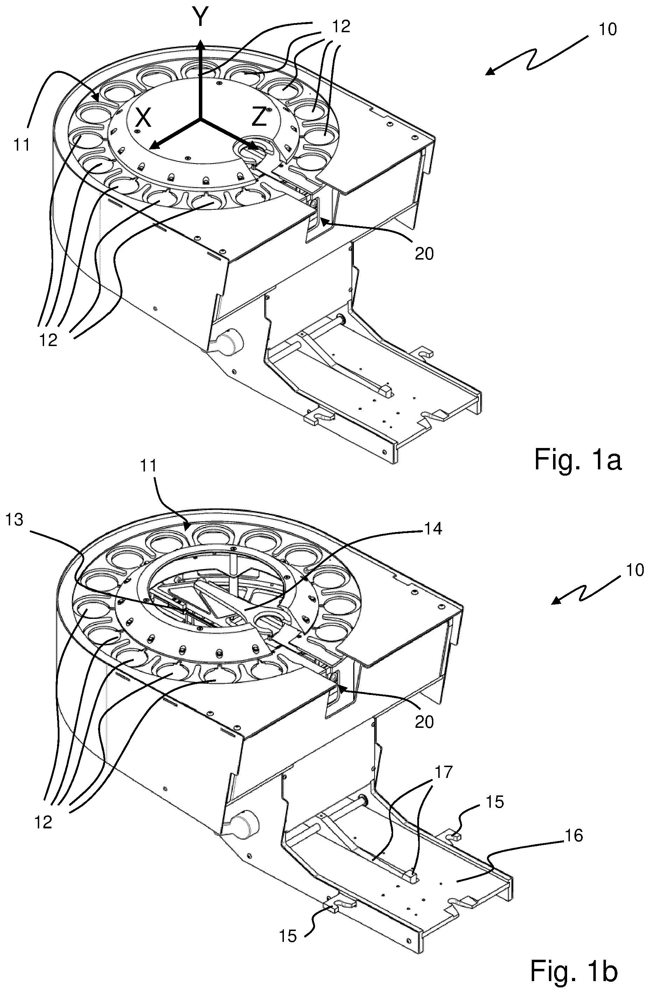

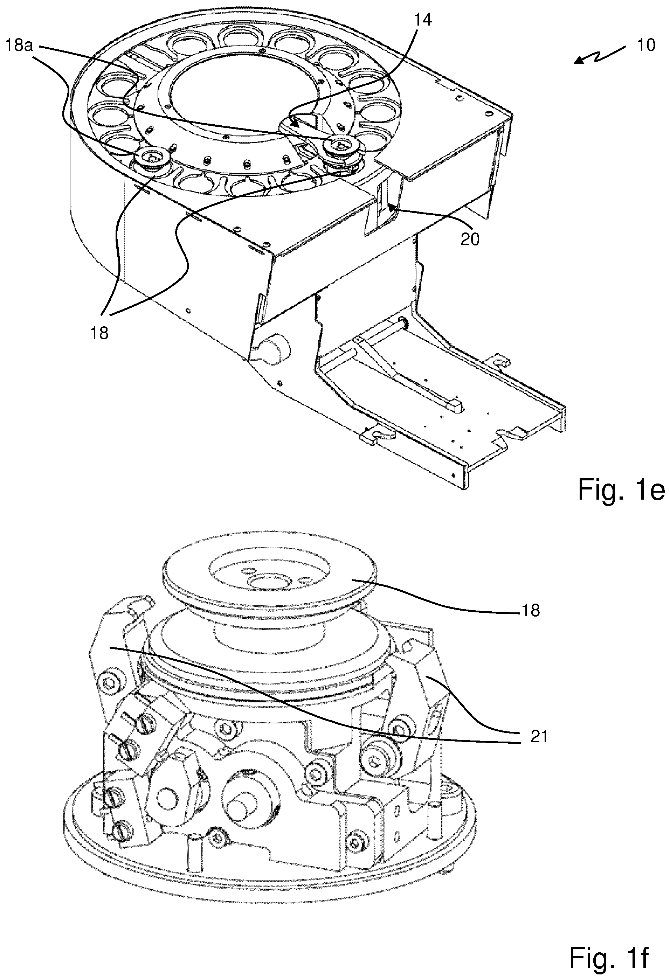

**Figs. 1a through 1f** schematically depict an embodiment of the novel sample changer 10 according to the invention comprising a **telescopic arm 13** having a drive system designed to perform a linear translatory back and forth movement in a **Z-direction perpendicular to the rotation axis Y** with an **end effector 14** arranged on the telescopic arm 13 designed to pick up a sample from the tray 11 and to carry the sample to a measurement chamber in the X-ray analysis device and back. The telescopic arm 13 is arranged in an **XZ plane** perpendicular to the rotation axis Y being radially directed from the center to an outer circumference of the rotatable tray 11.

The telescopic arm 13 feeds the samples into the instrument. The telescopic arm performs a linear back and forth movement in a single direction which is the loading direction, herein defined as a Z-axis perpendicular to the rotation axis Y.

The preferably forked end effector 14 is arranged on top of the telescopic arm 13 and grabs the samples contained in sample holders.

One end of the telescopic arm 13 is arranged essentially in the center of the rotatable tray 11 starting from the rotation axis Y of the sample position pattern, and that the drive system is arranged along the telescopic arm 13 in the Z-direction.

The sample changer 10 is arranged in front of the X-ray analysis device such that the measurement chamber is linearly accessible in Z-direction with the telescopic arm 13, preferably through a shutter (not shown in the drawings). Further, the sample changer 10 comprises at least two **fixing means 15,** in particular anchors, arranged on a **bottom plate 16** which are designed to engage with counterparts, in particular pins, on the bottom plate 16 of the X-ray analysis device in a linear movement of the sample changer 10 to the X-ray analysis device, and a **latching element 17** to fasten the sample changer 10 to the X-ray analysis device. The latching element 17 is part of a clamping device mounted to the rotary stage 11 of the CT instrument. It is required to make sure that the sample holder is properly fixed inside the scanner.

In **Fig. 1e****,** two **sample holders 18** for carrying the objects to be analyzed are depicted, which are designed to fit with the sample positions 12, whereby the sample positions 12 are protrusions or through holes in the rotatable tray 11. The sample holders 18 comprise a **circumferential rim or edge 18a** and the end effector 14 has a fork-shape designed to engage a sample holder 18. Further, the sample holders 18 can comprise a circumferential conical part (not shown in the drawings) and the end effector 14 can be designed as pincers that lift the sample holder 18 when pressed together.

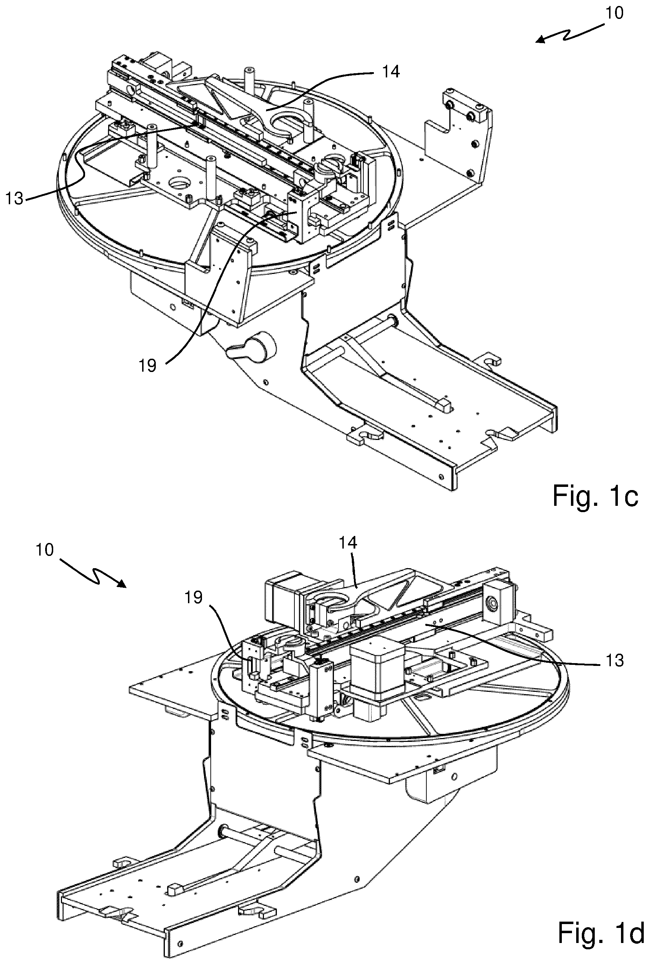

As shown in **Figs. 1c and 1d****,** the sample changer 10 may comprise a **lifting mechanism 19** for lifting a sample or a sample holder 18 to be picked up by the end effector 14. The lifting mechanism 19 lifts the sample preferably about 10mm in so it can be picked by the fork.

**Figs. 1a, 1b** **and** **1e** illustrate an **input slot 20** in Z-direction comprised by the rotatable tray 11 allowing the telescopic arm 13 with the end effector 14 to pass through the input slot 20 into the X-ray analysis device.

As explained above, the sample changer 10 comprises a rotatable tray 11 (also called "carousel") onto which the sample holders 18 with the samples can be positioned. The rotatable tray 11 or carousel rotates around the forked end effector 14 which moves only laterally.

Depending to the samples which are used the tray 11 can be adapted to carry up to e.g. 60 samples at once, preferably between 10 and 20 samples, the most preferred embodiment carries 15 samples. It is advisable to implement several layers to the sample changer 10 for increasing the total amount of samples by stacking them in the sample holder. Depending on how many can be stacked the number doubles, triples, etc. A double layer would increase the number of samples to 30, a third layer to 45.

The sample tray 11 is basically a disc having holes 12 in which the user can drop sample holders 18 with the samples one by one. There's no border/wall around it - lid or sample tray cover can be taken off entirely - so samples can be put on the carousel from above or sideways.

In the present embodiment the rotatable tray 11 is adapted to CT-measurements with 15 holes for receiving sample holders of a diameter of 5cm. The distance between the sample holders extends to 7.5cm.

According to the present invention, the device comprises also a telescopic arm 13 for picking up the sample holder 18 and for loading it into the X-ray device. The telescopic arm 13 has a forked end effector 14 which fits with the rim of the sample holder 18. By performing a simple translational movement the arm 13 can carry the sample holder 18 from the tray 11 into the measuring chamber of the X-ray device and back.

Thus, the invention presents a novel pick & place device inside the circumference of the circular sample tray having a telescopic arm to feed samples in - and retract samples from the main instrument. The pick & place device is positioned between the samples and at the level of sample tray.

The drive mechanism can be e.g. a gear drive or a toothed belt drive with stepper motor or DC motor, but also hydraulic or pneumatic cylinders would be possible.

The lift can be driven by a stepper motor. The mechanism uses a simple worm/wormwheel drive and a lever with cam follower to lift the platform as shown in the drawings.

In an alternative embodiment the lift can be driven by the motion of the arm/forks. In this case the lift mechanism comprises a platform with a chamfered part, and the platform elevates the lift when the slider with the fork moves towards the sample.

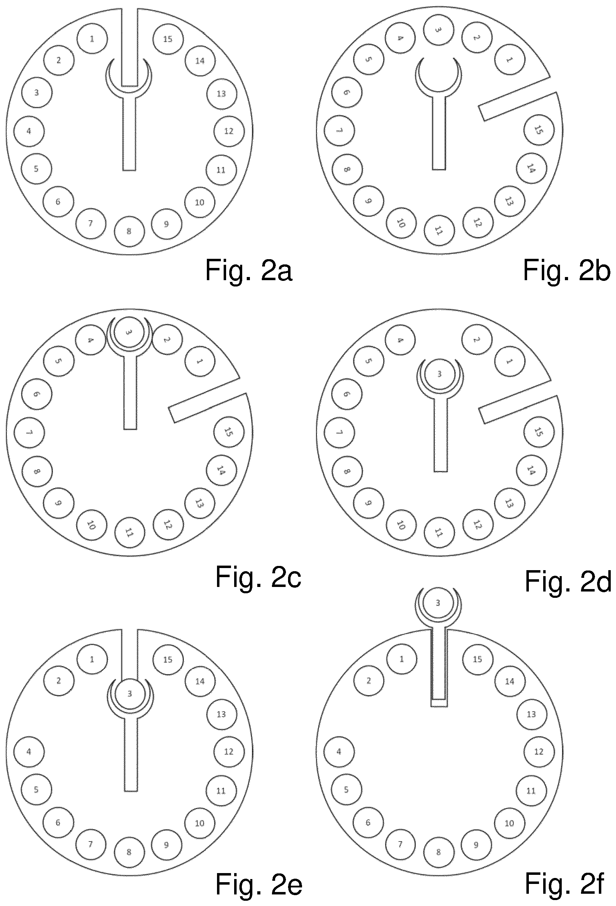

**Figs. 2a through 2g** schematically illustrate the loading/unloading of different samples (in this example just 15 samples) by a simple direct loading/unloading process. In this simple direct loading/unloading scheme, samples are picked and loaded/unloaded from their positions "one after the other" as defined in a batch process of the scanner. This process does not necessarily need to be performed in the sequential order of the positions/samples.

**Fig. 2a** shows the initial setup with the carousel positioned at position [0] = inserting slot where the gap is. All samples {1-15} are sited in their respective sample positions [1-15].

**Fig. 2b** shows the carousel rotated to position [3] being actually requested.

**Fig. 2c** shows the end effector being moved onto sample {3} and the fork of the end effector being lifted.

**Fig. 2d** shows the end effector being retracted with sample {3} gripped in the fork.

**Fig. 2e** shows the carousel being rotated to inserting slot [0] with sample {3} still being gripped in the fork.

**Fig. 2f** shows inserting the fork with sample {3} being inserted into the measuring area of the X-ray analysis device and placing the sample {3} with its sample holder inside the apparatus.

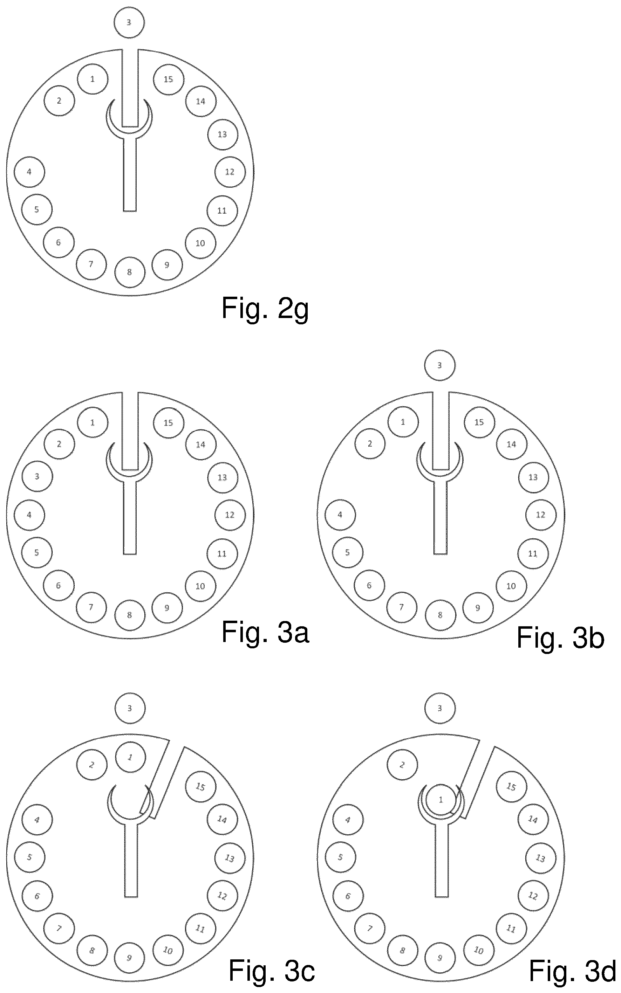

**Fig. 2g** shows the end effector with the emptied fork being retracted, while the sample {3} is in a measuring position inside the X-ray analysis device; the end effector with its emptied fork is waiting in its position for returning the sample {3} after measurement from the measuring position inside the X-ray analysis device and transporting it back to its initial position [3] on the carousel.

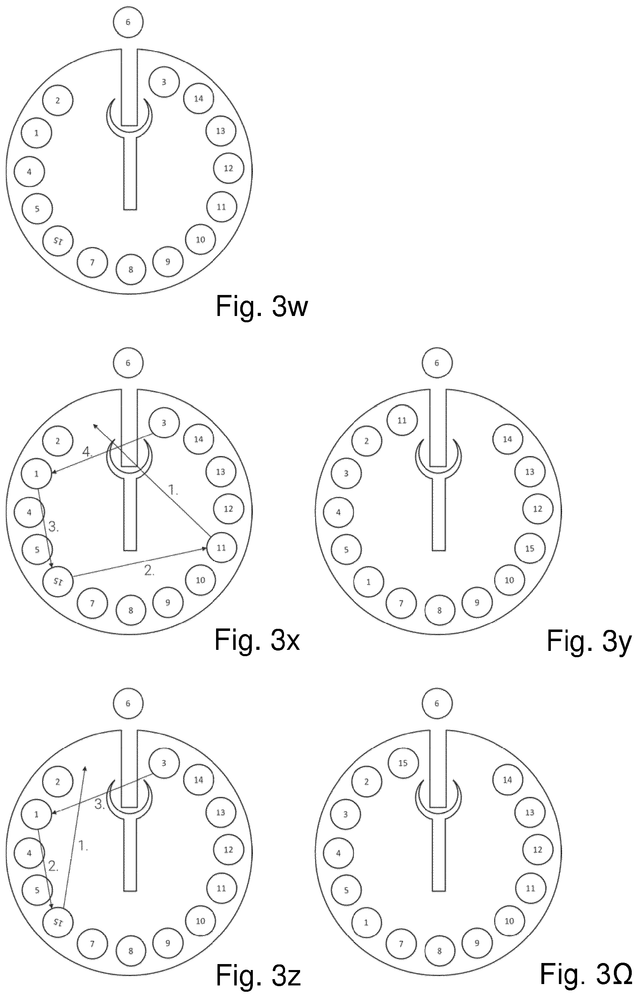

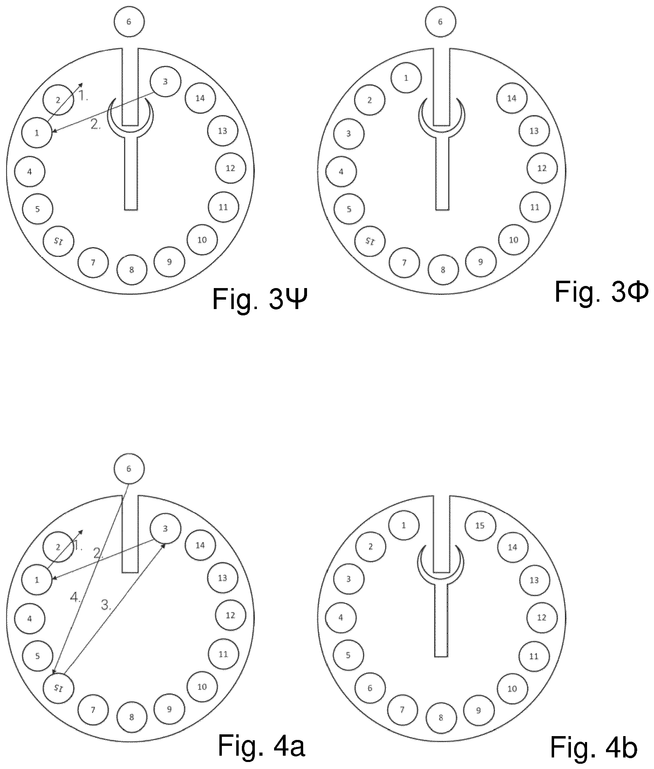

**Figs. 3a through 3****Ω** schematically illustrate the loading/unloading of different samples (in this example again just 15 samples) by an advanced and much more efficient loading/unloading process rendered possible by the novel modifications of the sample changer (10) according to the invention. In this advanced loading/unloading scheme, samples are picked and loaded/unloaded from their positions one after the other, again as defined in a batch process of the scanner. Although this process is less simple, it allows for substantially quicker performance of successive scans by sensible use of the (otherwise lost) scanning time for bringing the next sample in an optimal position.

The process includes the following steps:
▪ Picking and loading/unloading from their present position one after the other is quick when positioned near the loading slot.
▪ However, the more far away the position is from the inserting slot [0] the more time is required to rotate the carousel.
▪ This extra time is dead time the user might not want to spend
▪ Advanced (efficient) loading
   ▪ Introducing a loading position and an unloading position
   ▪ While the scan is performed on one sample the sample changer shuffles the samples on the carousel such that
      ▪ position [15] (unloading) is always free
      ▪ position [0] (loading) is always loaded with the next sample to be scanned

**Fig. 3a** shows the initial setup with the carousel positioned at position [0] where the gap is, position [0] being the loading, unloading and inserting slot. All samples {1-15} are placed in their respective initial positions [1-15].

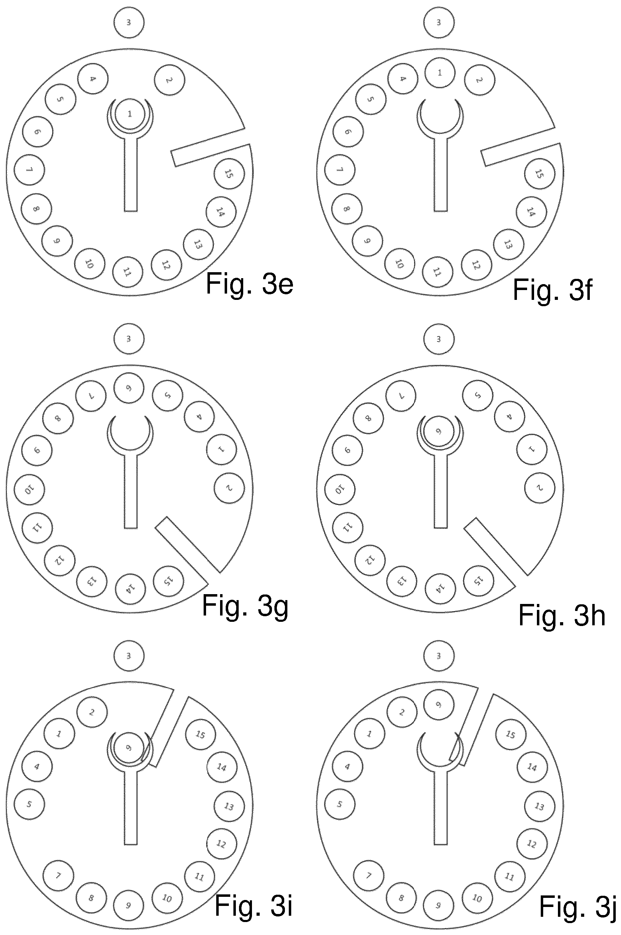

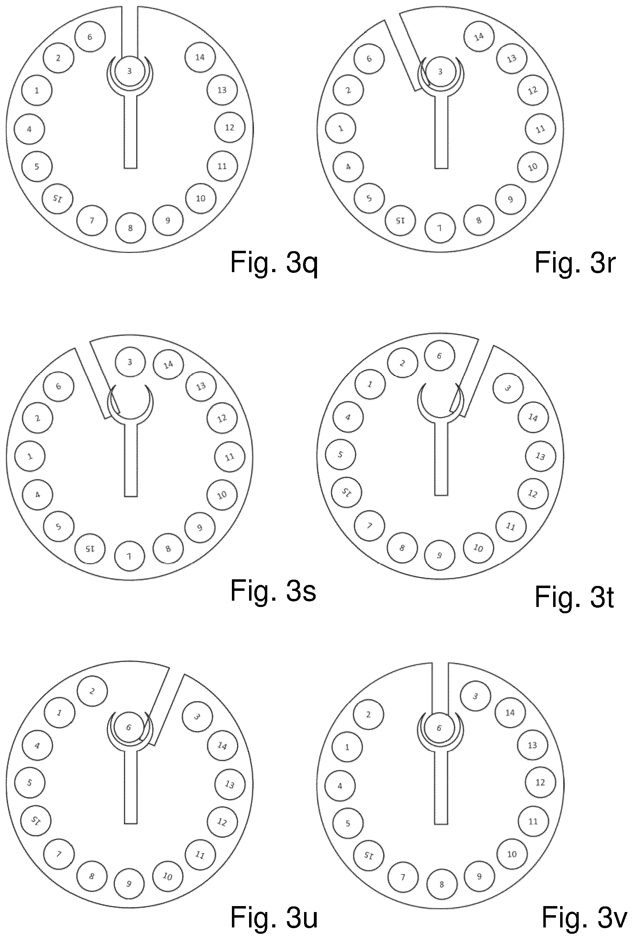

**Fig. 3b** shows the situation during a measurement of sample {3} in a measuring position inside the X-ray analysis device. In a simple loading process, the sample changer would just sit idle and wait to undo the loading of sample {3} in a simple way as illustrated in Fig. 2h. Instead of doing that, the apparatus performs the following steps:
**Fig. 3c** shows the beginning of a parking process of the sample {1} from the loading slot [1] onto the free position of the sample {3} that is currently been scanned and rotating the carousel to loading position [1].
**Fig. 3d** shows the grabbing of sample {1}. For simplification all necessary sub-steps are left out here for the description in individual movements, i.e.
   ▪ Move the fork onto sample
   ▪ Lift the fork
   ▪ Retract the fork
**Fig. 3e** shows the rotating of the carousel to the free position [3] of the sample {3} that is currently being scanned.
**Fig. 3f** shows the parking of the sample {1} on position [3]. For simplification all necessary sub-steps are left out here for the description in individual movements, i.e.
   ▪ Move the fork onto the slot
   ▪ Lower the fork
   ▪ Retract the fork
**Fig. 3g** shows the beginning of placing the next sample {6} to scan on the loading position [1] by rotating the carousel to position [6] of the next sample {6} to be scanned while sample {3} is still in the measuring position inside the X-ray analysis device. In fact, the order in which the samples are scanned is irrelevant and can be configured individually.
**Fig. 3h** shows the grabbing of the sample {6} with the end effector.
**Fig. 3i** shows the rotating of the carousel to loading position [1] while the sample {6} is still in the fork of the end effector.
**Fig. 3j** shows the parking of the sample {6} on the loading slot [0].

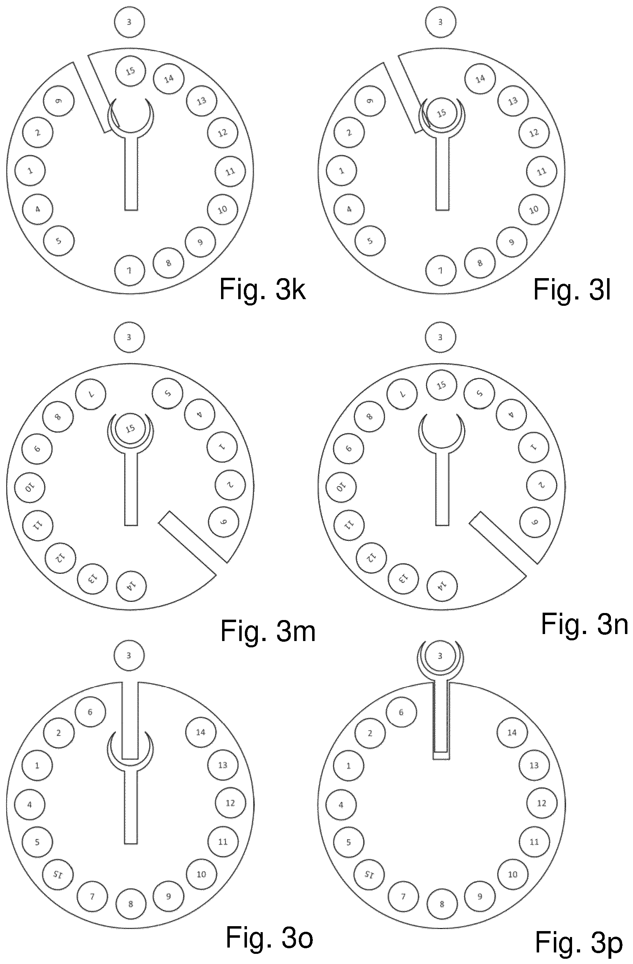

**Fig. 3k** shows the beginning of freeing up the unloading position and parking the sample {15} to position [6] of the next sample {6} to be scanned, while sample {3} is still in the measuring position inside the X-ray analysis device, namely the rotation of the tray to unload sample {15} from its present position [15].
**Fig. 3l** shows the grabbing of the sample {15} with the fork and lowering the end effector.
**Fig. 3m** shows the rotating of the carousel to position [6] (the original position of the next sample {6} to be scanned, which is now in position [1]) while the sample {15} is still on the fork of the end effector.
**Fig. 3n** shows the parking of the sample {15} on position [6].
**Fig. 3o** shows the rotating of the carousel to the inserting position [0].
**Fig. 3p** shows the grabbing of the measured sample {3} with the end effector in the measuring position inside the X-ray analysis device. For simplification all necessary sub-steps are left out here for the description in individual movements, i.e.
   ▪ Move the fork via position [0] unto the measuring position
   ▪ Lower the fork
   ▪ Move the fork over sample {3}
   ▪ Lift the fork
   ▪ Retract the fork
**Fig. 3q** shows the lowering of the end effector with the measured sample {3} from the measuring position inside the X-ray analysis device into the carousel.
**Fig. 3r** shows the rotating of the carousel to position [15] (the original slot of the sample {15}, which is actually parked in position [6]) while the sample {3} is still in the fork of the end effector.
**Fig. 3s** shows the parking of the recently scanned sample {3} on the unloading position [15].
**Fig. 3t** shows the rotating of the carousel to the loading position [1], the fork of the end effector being presently empty.
**Fig. 3u** shows the grabbing of the next sample {6} to be scanned from its parking position in position [1] (the sample {1} being parked in position [3]).
**Fig. 3v** shows the rotating of the carousel to the inserting position [0] with the next sample {6} to be scanned still gripped by the fork.
**Fig. 3w** shows the insertion of sample {6} by the end effector into the measuring position inside the X-ray analysis device for scanning. For simplification all necessary sub-steps are left out here for the description in individual movements, i.e.
   ▪ Move the fork via position [0] unto the measuring position of the apparatus
   ▪ Lower the fork
   ▪ Move the fork over to the rotary stage
   ▪ Lift the fork
   ▪ Retract the fork
**Fig. 3x** shows that the next steps are always the same for the following scans:
   1. Place the next sample {11} to scan on the loading position [1]
   2. Place the sample {15} parked on the position [6] onto the free position [11] of the next sample {11} to be scanned
   3. Place the sample {1} from the parking position [3] onto the position [6] of the sample {6} that is currently been scanned
   4. Free up the unloading position [15] and put the recently scanned sample {3} on its original position [3]
**Fig. 3y** shows the situation after performing the steps shown in Fig. 3x. The device is ready to put sample {6} to the unloading position [15] and insert the next sample from the loading position [1].
**Fia. 3z** shows a procedure alternative to Fig. 3x in case the last sample to be scanned is the one from the unloading position [15]:
   1. Place the next sample {15} to be scanned (which is currently parked on the slot [6] of the sample {6} that is currently being scanned) on the loading position [1]
   2. Place the sample {1} from the parking position [3] onto the position [6] of the sample {6} that is currently been scanned
   3. Free up the unloading position [15] and put the recently scanned sample {3} on its original position [3]
**Fig. 3****Ω** shows the situation after performing the steps shown in Fig. 3z.
**Fig. 3****Ψ** shows a procedure alternative to Fig. 3x in case the sample to be scanned is the one from the loading position [1]:
   4. Place the next sample {1} to be scanned (which is currently parked on the slot [3] of the sample {3} that was recently scanned) on the loading position [1]
   5. Free up the unloading position [15] and put the recently scanned sample {3} on its original position [3]
**Fig. 3****Φ** shows the situation after performing the steps shown in Fig. 3Ψ.
**Figs 4a-4b****:** After the last measurement we restore the original positions of the samples, i.e.
   6. Place sample {1} that was on the loading slot [1] at the beginning of the sequence back to its original position
   7. Free up the unloading position and put the recently scanned sample on its original spot [3] which was occupied by the sample from the loading slot
   8. Place the next sample from the unloading slot [15] back to its original position
   9. Put the last scanned sample that is still in the scanner back to its original position which was occupied by the sample from the unloading slot.

### List of reference signs:

- 10: sample changer
- 11: rotatable tray
- 12: sample positions
- 13: telescopic arm
- 14: end effector
- 15: fixing means
- 16: bottom plate
- 17: latching element
- 18: sample holders
- 18a: rim or edge of sample holders
- 19: lifting mechanism
- 20: input slot
- 21: clamping jaws
- X: direction perpendicular to Y and Z
- Y: rotation axis of the tray
- Z: axis of translatory back and forth movement of the telescopic arm

### Prior art citations:

Publications considered for assessing patentability of the present invention:
[1] BRUKER-brochure "SKYSCAN 1272 CMOS Edition; 3D X-ray Microscopy Solutions" by Bruker BioSpin, T186803, 06/2021
[2] BRUKER-brochure "SKYSCAN 1275; Fast, Automated, Desk-Top X-Ray Microtomograph" by Bruker microCT, Belgium, 2016
[3] DE 198 51 501 C1
[4] US 6,111,930 A
[5] CN 113960081 A
[6] CN 218995266 U
[7] CN 106383134 A
[8] US D715,958 S
[9] CN 103344659 A
[10] US 2014/0123738 A1

## Claims

1. X-ray analysis device with a sample changer (10) comprising
a tray (11) rotatable around a rotation axis Y and having a plurality of sample positions (12) in a circular pattern, the rotatable tray (11) being driven by a motor to rotate the tray (11) around the rotation axis Y of the sample position pattern,
**characterized in**
**that** the sample changer (10) comprises a telescopic arm (13) having a drive system designed to perform a linear translatory back and forth movement in a Z-direction perpendicular to the rotation axis Y with a end effector (14) arranged on the telescopic arm (13) designed to pick up a sample from the tray (11) and to carry the sample to a measurement chamber in the X-ray analysis device and back;
and **that** the telescopic arm (13) is arranged in an XZ plane perpendicular to the rotation axis Y being radially directed from the center to an outer circumference of the rotatable tray (11).

2. X-ray analysis device according to claim 1, **characterized in that** one end of the telescopic arm (13) is arranged essentially in the center of the rotatable tray (11) starting from the rotation axis Y of the sample position pattern, and that the drive system is arranged along the telescopic arm (13) in the Z-direction perpendicular to the rotation axis Y.

3. X-ray analysis device according to anyone of the previous claims, **characterized in that** the sample changer (10) is arranged in front of the X-ray analysis device such that the measurement chamber is linearly accessible in Z-direction with the telescopic arm (13), preferably through a shutter.

4. X-ray analysis device according to claim 3, **characterized in that** the sample changer (10) comprises at least two fixing means (15), in particular anchors, arranged on a bottom plate (16) which are designed to engage with counterparts, in particular pins, on the bottom plate (16) of the X-ray analysis device in a linear movement of the sample changer (10) to the X-ray analysis device, and a latching element (17) to fasten the sample changer (10) to the X-ray analysis device.

5. Sample changer (10) for an X-ray analysis device according to anyone of the previous claims, preferably an X-ray diffractometer or a CT apparatus, **characterized in that** the sample changer (10) further comprises a plurality of sample holders (18) for carrying the objects to be analyzed, and designed to fit with the sample positions (12), whereby the sample positions (12) are protrusions or through holes in the rotatable tray (11).

6. Sample changer (10) according to claim 5, **characterized in that** the sample changer (10) comprises a pair of clamping jaws (21) with a mechanism for clamping and opening the jaws (21) to releasably lock the sample holder (18) in position on the rotatable tray (11) when the telescopic arm (13) is approaching or retracting.

7. Sample changer (10) according to anyone of claims 5 or 6, **characterized in that** the sample holders (18) comprise a circumferential rim or edge (18a) and the end effector (14) has a fork-shape designed to engage a sample holder (18).

8. Sample changer (10) according to anyone of claims 5 through 7, **characterized in that** the sample changer (10) further comprises a lifting mechanism (19) for lifting a sample or a sample holder (18) to be picked up by the end effector (14).

9. Sample changer (10) of an X-ray analysis device according to anyone of the previous claims, **characterized in that** the sample holders (18) comprise a circumferential conical part and the end effector (14) is an actively driven end effector, preferably designed as pincers that lift the sample holder (18) when pressed together.

10. Sample changer (10) according to anyone of the previous claims, **characterized in that** the rotatable tray (11) is further comprising an input slot (20) in Z-direction allowing the telescopic arm (13) to pass through the input slot (20) into the X-ray analysis device.

11. Method for performing an X-ray measurement comprising the following steps:
i. Providing an X-ray analysis device according to anyone of claims 1 through 4, whereby out of all sample positions (12) of the rotatable tray (11) of sample changer (10) and a scan position inside the measurement instrument at least one position is free;
ii. loading the X-ray analysis device with a sample, starting the measurement, and placing the sample that is to be scanned next on a first side of the input slot (20) and making sure that on the second side of the input slot (20) there is a free position to place the measured sample.

12. Method for performing an x-ray measurement according to claim 11, whereby step ii. is carried out with the following sub-steps:
ii.1) Before the measurement of the first sample
a) Dialing the rotatable tray (11) to have the first sample to be measured in front of the end effector (14) of the telescopic arm (13)
b) Picking up the first sample and place it into the X-ray analysis device
ii.2) Start the measurement of the first sample,
ii.3) During the measurement of the first sample,
a) dialing the rotatable tray (11) to the position of the subsequent sample (second object) to be measured, pick the sample and put it onto the free first position next to the input slot (20)
ii.4) After the measurement of the first sample,
a) Picking up the first sample from the X-ray analysis device and positioning it to the free position on the second side of the input slot (20)
b) dialing the rotatable tray (11) to the first side of the input slot (20) which is filled by the subsequent sample, pick the sample and place it into the X-ray analysis device
c) dialing the rotatable tray (11) to the sample position next to the second side of the input slot (20), pick the sample and put it onto a free position on the rotatable tray (11)
ii.5) Repeat steps ii.1) to ii.4) until every sample is measured.

13. Method for performing an x-ray measurement according to claim 12, further comprising an initial step ii.1.1.a) clearing the scan position inside the measurement instrument when it is occupied by another sample than the first sample to be scanned by picking up the sample and put it onto the free position on the rotatable tray (11).

14. Method for performing an x-ray measurement according of claims 12 or 13, further comprising step ii.3.1.a): if the sample position next to a first side of the input slot (20) is not free, dialing the rotatable tray (11) to that position, pick the sample and put it onto a free sample position on the rotatable tray (11).

15. Method for performing an x-ray measurement according to anyone of claims 12 through 14, further comprising step ii.3.2): if the sample position next to a second side of the input slot (20) is not free, dialing the rotatable tray (11) to that sample position, picking the sample and putting it onto a free sample position on the rotatable tray (11).

## Patentansprüche

1. Vorrichtung zur Röntgenanalyse mit einem Probenwechsler (10), der eine um eine Drehachse Y drehbare Ablage (11) mit einer Vielzahl von Probenpositionen (12) in einer kreisförmigen Anordnung umfasst, wobei die drehbare Ablage (11) durch einen Motor angetrieben wird, um die Ablage (11) um die Drehachse Y des Musters der Probenposition zu drehen,
**dadurch gekennzeichnet**
**dass** der Probenwechsler (10) einen Teleskoparm (13) umfasst, der ein Antriebssystem aufweist, das so ausgelegt ist, dass es eine lineare Translationsbewegung vor und zurück in Z-Richtung senkrecht zur Drehachse Y ausführt, wobei ein End-Effektor (14) am Teleskoparm (13) angeordnet ist, der so ausgelegt ist, dass er eine Probe vom Ablage (11) aufnimmt und die Probe zu einer Messkammer in der Vorrichtung zur Röntgenanalyse und zurück transportiert;
und **dass** der Teleskoparm (13) in einer zur Drehachse Y senkrechten XZ-Ebene angeordnet ist, die radial vom Zentrum zum Außenumfang des drehbaren Tellers (11) gerichtet ist.

2. Vorrichtung zur Röntgenanalyse nach Anspruch 1, **dadurch gekennzeichnet, dass** ein Ende des Teleskoparms (13) im Wesentlichen in der Mitte des drehbaren Tellers (11), ausgehend von der Drehachse Y des Musters der Probenposition, angeordnet ist, und dass das Antriebssystem entlang des Teleskoparms (13) in der Z-Richtung senkrecht zur Drehachse Y angeordnet ist.

3. Vorrichtung zur Röntgenanalyse nach einem der vorhergehenden Ansprüche, **dadurch gekennzeichnet, dass** der Probenwechsler (10) vor der Vorrichtung zur Röntgenanalyse so angeordnet ist, dass die Messkammer mit dem Teleskoparm (13) in Z-Richtung linear zugänglich ist, vorzugsweise durch eine Blende.

4. Vorrichtung zur Röntgenanalyse nach Anspruch 3, **dadurch gekennzeichnet, dass** der Probenwechsler (10) mindestens zwei Befestigungsmittel (15) umfasst, insbesondere Anker, die auf einer Bodenplatte (16) angeordnet sind und dazu ausgelegt sind, bei einer linearen Bewegung des Probenwechslers (10) zur Vorrichtung zur Röntgenanalyse mit Gegenstücken, insbesondere Stiften, auf der Bodenplatte (16) der Vorrichtung zur Röntgenanalyse in Eingriff zu kommen, sowie ein Verriegelungselement (17) zum Befestigen des Probenwechslers (10) an der Vorrichtung zur Röntgenanalyse.

5. Probenwechsler (10) für eine Vorrichtung zur Röntgenanalyse nach einem der vorhergehenden Ansprüche, vorzugsweise ein Röntgen-Diffraktometer oder ein CT-Apparat, **dadurch gekennzeichnet, dass** der Probenwechsler (10) ferner eine Vielzahl von Probenhaltern (18) zum Tragen der zu analysierenden Objekte umfasst, die so ausgelegt sind, dass sie in die Probenpositionen (12) passen, wobei die Probenpositionen (12) Vorsprünge oder Durchgangsbohrungen in der drehbaren Ablage (11) sind.

6. Probenwechsler (10) nach Anspruch 5, **dadurch gekennzeichnet, dass** der Probenwechsler (10) ein Paar Klemmbacken (21) mit einem Mechanismus zum Klemmen und Öffnen der Backen (21) umfasst, um den Probenhalter (18) lösbar in seiner Position auf der drehbaren Ablage (11) zu arretieren, wenn sich der Teleskoparm (13) nähert oder zurückzieht.

7. Probenwechsler (10) nach einem der Ansprüche 5 oder 6, **dadurch gekennzeichnet, dass** die Probenhalter (18) einen umlaufenden Rand oder eine umlaufende Kante (18a) aufweisen und der End-Effektor (14) eine Gabelform aufweist, die so ausgelegt ist, dass sie in einen Probenhalter (18) eingreift.

8. Probenwechsler (10) nach einem der Ansprüche 5 bis 7, **dadurch gekennzeichnet, dass** der Probenwechsler (10) ferner einen Hebe-Mechanismus (19) zum Anheben einer Probe oder eines Probenhalters (18) umfasst, die bzw. der vom End-Effektor (14) aufgenommen werden soll.

9. Probenwechsler (10) einer Vorrichtung zur Röntgenanalyse nach einem der vorhergehenden Ansprüche, **dadurch gekennzeichnet, dass** die Probenhalter (18) einen umlaufenden konischen Abschnitt aufweisen und der End-Effektor (14) ein aktiv angetriebener End-Effektor ist, vorzugsweise als Zange ausgebildet, die den Probenhalter (18) anhebt, wenn sie zusammengedrückt wird.

10. Probenwechsler (10) nach einem der vorhergehenden Ansprüche, **dadurch gekennzeichnet, dass** die drehbare Ablage (11) ferner einen Einführschlitz (20) in Z-Richtung aufweist, der es dem Teleskoparm (13) ermöglicht, durch den Einführschlitz (20) in die Vorrichtung zur Röntgenanalyse zu gelangen.

11. Verfahren zur Durchführung einer Röntgenmessung, welches die folgenden Schritte umfasst:
i. Bereitstellen einer Vorrichtung zur Röntgenanalyse nach einem der Ansprüche 1 bis 4, wobei von allen Probenpositionen (12) der drehbaren Ablage (11) des Probenwechslers (10) und einer Scanposition innerhalb des Messgeräts mindestens eine Position frei ist;
ii. Beladen der Vorrichtung zur Röntgenanalyse mit einer Probe, Starten der Messung und Platzieren der als nächstes zu scannenden Probe auf einer ersten Seite des Eingangsschlitzes (20) sowie Sicherstellen, dass auf der zweiten Seite des Eingangsschlitzes (20) eine freie Position zum Platzieren der gemessenen Probe vorhanden ist.

12. Verfahren zur Durchführung einer Röntgenmessung nach Anspruch 11, wobei der Schritt ii. mit den folgenden Teilschritten durchgeführt wird:
ii.1) Vor der Messung der ersten Probe
a) Drehen der drehbaren Ablage (11), damit sich die erste zu messende Probe vor dem End-Effektor (14) des Teleskoparms (13) befindet
b) Aufnehmen der ersten Probe und Einlegen in die Vorrichtung zur Röntgenanalyse
ii.2) Starten der Messung der ersten Probe,
ii.3) Während der Messung der ersten Probe,
a) Drehen der drehbaren Ablage (11) in die Position der nachfolgenden zu messenden Probe (zweites Objekt), Aufnehmen der Probe und Ablegen auf die freie erste Position neben dem Einführschlitz (20)
ii.4) Nach der Messung der ersten Probe,
a) die erste Probe aus der Vorrichtung zur Röntgenanalyse entnehmen und auf die freie Position auf der zweiten Seite des Einführschlitzes (20) setzen
b) die drehbare Ablage (11) auf die erste Seite des Einführschlitzes (20) drehen, die von der nachfolgenden Probe belegt ist, die Probe entnehmen und in die Vorrichtung zur Röntgenanalyse legen
c) die drehbare Ablage (11) auf die Probenposition neben der zweiten Seite des Einführschlitzes (20) drehen, die Probe entnehmen und auf eine freie Position auf der drehbaren Ablage (11) legen
ii.5) Die Schritte ii.1) bis ii.4) wiederholen, bis jede Probe gemessen ist.

13. Verfahren zur Durchführung einer Röntgenmessung nach Anspruch 12, das ferner einen anfänglichen Schritt ii.1.1.a) umfasst, bei dem die Scanposition im Messgerät freigemacht wird, wenn sie von einer anderen Probe als der ersten zu scannenden Probe belegt ist, indem die Probe aufgenommen und auf eine freie Position auf der drehbaren Ablage (11) gelegt wird.

14. Verfahren zur Durchführung einer Röntgenmessung nach den Ansprüchen 12 oder 13, das ferner den Schritt ii.3.1.a) umfasst:
Wenn die Probenposition neben einer ersten Seite des Eingabeschlitzes (20) nicht frei ist, wird die drehbare Ablage (11) in diese Position gedreht, die Probe aufgenommen und auf eine freie Probenposition auf der drehbaren Ablage (11) gelegt.

15. Verfahren zur Durchführung einer Röntgenmessung nach einem der Ansprüche 12 bis 14, das ferner den Schritt ii.3.2 umfasst:
Wenn die Probenposition neben einer zweiten Seite des Eingabeschlitzes (20) nicht frei ist, wird die drehbare Ablage (11) auf diese Probenposition gedreht, die Probe aufgenommen und auf eine freie Probenposition auf der drehbaren Ablage (11) gelegt.

## Revendications

1. Dispositif d'analyse par rayons X avec un changeur d'échantillons (10) comprenant
un plateau (11) pouvant tourner autour d'un axe de rotation Y et comportant une pluralité de positions d'échantillons (12) disposées en cercle, le plateau rotatif (11) étant entraîné par un moteur pour faire tourner le plateau (11) autour de l'axe de rotation Y du schéma de positionnement des échantillons,
**caractérisé en ce**
**que** le changeur d'échantillons (10) comprend un bras télescopique (13) doté d'un système d'entraînement conçu pour effectuer un mouvement de translation linéaire de va-et-vient dans une direction Z perpendiculaire à l'axe de rotation Y, avec un effecteur terminal (14) disposé sur le bras télescopique (13) et conçu pour prélever un échantillon du plateau (11) et pour transporter l'échantillon vers une chambre de mesure dans le dispositif d'analyse par rayons X et le ramener ;
et en ce que le bras télescopique (13) est disposé dans un plan XZ perpendiculaire à l'axe de rotation Y, s'étendant radialement du centre vers la circonférence extérieure du plateau rotatif (11).

2. Dispositif d'analyse par rayons X selon la revendication 1, **caractérisé en ce qu'**une extrémité du bras télescopique (13) est disposée essentiellement au centre du plateau rotatif (11) à partir de l'axe de rotation Y du schéma de positionnement des échantillons, et **en ce que** le système d'entraînement est disposé le long du bras télescopique (13) dans la direction Z perpendiculaire à l'axe de rotation Y.

3. Dispositif d'analyse par rayons X selon l'une quelconque des revendications précédentes, **caractérisé en ce que** le changeur d'échantillons (10) est disposé devant le dispositif d'analyse par rayons X de telle sorte que la chambre de mesure soit accessible linéairement dans la direction Z avec le bras télescopique (13), de préférence à travers un obturateur.

4. Dispositif d'analyse par rayons X selon la revendication 3, **caractérisé en ce que** le changeur d'échantillons (10) comprend au moins deux moyens de fixation (15), en particulier des ancrages, disposés sur une plaque de fond (16) et conçus pour s'engager avec des éléments complémentaires, en particulier des broches, sur la plaque de fond (16) du dispositif d'analyse par rayons X lors d'un mouvement linéaire du changeur d'échantillons (10) vers le dispositif d'analyse par rayons X, et un élément de verrouillage (17) pour fixer le changeur d'échantillons (10) au dispositif d'analyse par rayons X.

5. Changeur d'échantillons (10) pour un dispositif d'analyse par rayons X selon l'une quelconque des revendications précédentes, de préférence un diffractomètre à rayons X ou un appareil de tomodensitométrie, **caractérisé en ce que** le changeur d'échantillons (10) comprend en outre une pluralité de porte-échantillons (18) destinés à supporter les objets à analyser, et conçus pour s'adapter aux positions d'échantillons (12), les positions d'échantillon (12) étant des saillies ou des trous traversants dans le plateau rotatif (11).

6. Changeur d'échantillons (10) selon la revendication 5, **caractérisé en ce que** le changeur d'échantillons (10) comprend une paire de mâchoires de serrage (21) avec un mécanisme permettant de serrer et d'ouvrir les mâchoires (21) afin de verrouiller de manière amovible le porte-échantillon (18) en position sur le plateau rotatif (11) lorsque le bras télescopique (13) s'approche ou se rétracte.

7. Changeur d'échantillons (10) selon l'une quelconque des revendications 5 ou 6, **caractérisé en ce que** les porte-échantillons (18) comprennent un rebord ou un bord circonférentiel (18a) et l'effecteur terminal (14) présente une forme en fourche conçue pour s'engager avec un porte-échantillon (18).

8. Changeur d'échantillons (10) selon l'une quelconque des revendications 5 à 7, **caractérisé en ce que** le changeur d'échantillons (10) comprend en outre un mécanisme de levage (19) destiné à soulever un échantillon ou un porte-échantillon (18) devant être saisi par l'effecteur terminal (14).

9. Changeur d'échantillons (10) d'un dispositif d'analyse par rayons X selon l'une quelconque des revendications précédentes, **caractérisé en ce que** les porte-échantillons (18) comprennent une partie conique circonférentielle et l'effecteur terminal (14) est un effecteur terminal à entraînement actif, de préférence conçu sous la forme de pinces qui soulèvent le porte-échantillon (18) lorsqu'elles sont pressées l'une contre l'autre.

10. Changeur d'échantillons (10) selon l'une quelconque des revendications précédentes, **caractérisé en ce que** le plateau rotatif (11) comprend en outre une fente d'entrée (20) dans la direction Z permettant au bras télescopique (13) de passer à travers la fente d'entrée (20) pour pénétrer dans le dispositif d'analyse par rayons X.

11. Procédé pour effectuer une mesure par rayons X comprenant les étapes suivantes :
i. Fournir un dispositif d'analyse par rayons X selon l'une quelconque des revendications 1 à 4, de sorte que, parmi toutes les positions d'échantillon (12) du plateau rotatif (11) du changeur d'échantillons (10) et une position de balayage à l'intérieur de l'instrument de mesure, au moins une position soit libre ;
ii. charger le dispositif d'analyse par rayons X avec un échantillon, démarrer la mesure, et placer l'échantillon à scanner ensuite sur un premier côté de la fente d'entrée (20) et s'assurer que, sur le deuxième côté de la fente d'entrée (20), il y a une position libre pour placer l'échantillon mesuré.

12. Procédé pour effectuer une mesure par rayons X selon la revendication 11, dans lequel l'étape ii. est réalisée avec les sous-étapes suivantes :
ii.1) Avant la mesure du premier échantillon
a) Positionner le plateau rotatif (11) de manière à ce que le premier échantillon à mesurer se trouve devant l'effecteur terminal (14) du bras télescopique (13)
b) Prendre le premier échantillon et le placer dans le dispositif d'analyse aux rayons X
ii.2) Lancer la mesure du premier échantillon,
ii.3) Pendant la mesure du premier échantillon,
a) régler le plateau rotatif (11) sur la position de l'échantillon suivant (deuxième objet) à mesurer, prendre l'échantillon et le placer sur la première position libre à côté de la fente d'entrée (20)
ii.4) Après la mesure du premier échantillon,
a) Retirer le premier échantillon du dispositif d'analyse aux rayons X et le placer sur la position libre du deuxième côté de la fente d'entrée (20)
b) Régler le plateau rotatif (11) sur le premier côté de la fente d'entrée (20) où se trouve l'échantillon suivant, prélever l'échantillon et le placer dans le dispositif d'analyse aux rayons X
c) faire tourner le plateau rotatif (11) jusqu'à la position d'échantillon située à côté du deuxième côté de la fente d'entrée (20), prélever l'échantillon et le placer sur une position libre du plateau rotatif (11)
ii.5) Répéter les étapes ii.1) à ii.4) jusqu'à ce que tous les échantillons aient été mesurés.

13. Procédé pour effectuer une mesure par rayons X selon la revendication 12, comprenant en outre une étape initiale ii.1.1.a) consistant à libérer la position de balayage à l'intérieur de l'instrument de mesure lorsqu'elle est occupée par un échantillon autre que le premier échantillon à balayer, en prélevant l'échantillon et en le plaçant sur une position libre du plateau rotatif (11).

14. Procédé de réalisation d'une mesure par rayons X selon l'une des revendications 12 ou 13, comprenant en outre l'étape ii.3.1.a) :
si la position d'échantillon adjacente à un premier côté de la fente d'entrée (20) n'est pas libre, faire pivoter le plateau rotatif (11) vers cette position, prendre l'échantillon et le placer sur une position d'échantillon libre sur le plateau rotatif (11).

15. Procédé pour effectuer une mesure par rayons X selon l'une quelconque des revendications 12 à 14, comprenant en outre l'étape ii.3.2) :
si la position d'échantillon adjacente à un deuxième côté de la fente d'entrée (20) n'est pas libre, faire tourner le plateau rotatif (11) jusqu'à cette position d'échantillon, prélever l'échantillon et le placer sur une position d'échantillon libre sur le plateau rotatif (11).
